# EUROPEAN PATENT APPLICATION

(11) **EP 4 718 034 A1**
(43) Date of publication of application: **01.04.2026**
(21) Application number: 25204749.3
(22) Date of filing: 25.09.2025
(51) Int. Cl.: G01D 3/08

(54) **DETECTION OF CHANGE IN THE RELATIVE POSITION OF BETA SENSORS TO BETA RING**

(30) Priority: 25.09.2024 US 202418896626
(71) Applicant: PRATT & WHITNEY CANADA CORP., Longueuil, Québec J4G 1A1 (CA)
(72) Inventor: KRZYWON, Jagoda, (01BE5) Longueuil, J4G 1A1 (CA); HANNA, Michael, (01BE5) Longueuil, J4G 1A1 (CA)
(74) Representative: Dehns

(57) **Abstract**

A method includes detecting a characteristic associated with an output waveform from a beta sensor (112) generated responsive to passage of an indicator (102) of a beta ring (104) past the beta sensor (112), comparing the detected characteristic with a reference point for the characteristic associated with the output waveform for the beta sensor (112) within a controller (115), determining if the detected characteristic associated with the output waveform is different from the reference point for the characteristic associated with the output waveform by a first amount within the controller (115), wherein the first amount indicates that the beta sensor (112) has moved the first amount from a previous position with respect to the beta ring (104) and in response to the determining that the detected characteristic is different from the reference point by the first amount, generating a fault code indicating that the beta sensor (112) has moved at least the first amount with respect to the beta ring (104).

## Description

### TECHNICAL FIELD

This disclosure relates generally to beta sensors. More specifically, this disclosure relates to determining changes in the relative position of beta sensors with respect to a beta ring.

### BACKGROUND

Some aircraft engines have propellers with variable pitch, referred to as propeller blade (or beta) angle. In such engines, accurate control of the beta angle is important for proper engine operation. For example, control of the beta angle may allow the blade angle to be controlled according to the desired engine power set-point. Accurate measure of the blade angle also ensures that the propeller is not inadvertently commanded to transition into low or reverse beta angles, which would cause a potentially serious failure condition for the aircraft.

Beta sensors are used for determining the blade angle within an aircraft engine. During aircraft engine operation the position of the beta sensors may change. This can cause errors in control of the blade angle. Thus, some manner for confirming the positioning of the beta sensors would be greatly desirable.

### SUMMARY

The present invention relates to a system and method for determining the relative position of beta sensors.

In an aspect of the present invention, a method for detecting relative movement of a position of a beta sensor. The method also includes detecting a characteristic associated with an output waveform from a beta sensor generated responsive to passage of an indicator of a beta ring past the beta sensor, comparing the detected characteristic with a reference point for the characteristic associated with the output waveform for the beta sensor within a controller, determining if the detected characteristic associated with the output waveform is different from the reference point for the characteristic associated with the output waveform by a first amount within the controller, where the first amount indicates that the beta sensor has moved the first amount from a previous position with respect to the beta ring, and, in response to the determining that the detected characteristic is different from the reference point by the first amount, generating a fault code indicating that the beta sensor has moved at least the first amount with respect to the beta ring.

Any single one or any combination of the following features may be used with the aspect above. The method may include storing the detected characteristics associated with the output waveform from the beta sensor within a memory. The method may include establishing the reference point for the characteristic associated with the output waveform for the beta sensor after initial installation of the beta sensor and storing the reference point within a memory. The step of detecting further may include recording movement of a plurality of indicators on a surface of the beta ring rotating past the beta sensor and generating a waveform from the recorded movement of the indicators. The step of detecting further may include determining a period of the waveform responsive to an outlier indicator on the surface of the beta ring. The step of comparing further may include comparing the period of the waveform with a previously recorded period of the waveform associated with the beta sensor.

In a further aspect of the present invention, a method for detecting relative movement of a position of a beta sensor with respect to a beta ring. The method also includes detecting a waveform having a first period generated by the beta sensor responsive to passage of a plurality of indicators of a beta ring past the beta sensor, comparing the detected waveform having the first period with a reference waveform having a reference period within a controller; determining if the detected waveform is different from the reference waveform by a first amount within the controller, where the first amount indicates that one of the beta sensors has moved the first amount from a previous position with respect to the beta ring, and, in response to the determining that the detected characteristic is different from the reference point by the first amount, generating a fault code indicating that the beta sensor has moved at least the first amount with respect to the beta ring.

Any single one or any combination of the following features may be used with the aspect above. The method may include storing the detected waveform having the first period within a memory. The step of storing may include storing multiple versions of the detected waveform detected and a plurality of points in time. The method may include establishing the reference waveform having the reference period for the beta sensor using the controller after initial installation of the beta sensor and storing the reference waveform within a memory. The method may include updating the reference waveform with a later determined waveform for the beta sensor. The step of detecting further may include recording movement of the plurality of indicators on a surface of the beta ring rotating past the beta sensor and generating the waveform having the first period from the recorded movement of the plurality of indicators. The steps of detecting further may include determining the first period of the waveform responsive to an outlier indicator on the surface of the beta ring. The fault code may include at least one of a maintenance fault code and a dispatch fault code.

In a further aspect of the present invention, a system for detecting relative movement of a position of beta sensors. The system also includes a beta ring having a plurality of teeth thereon, where one of the plurality of teeth may include an outlier tooth that is different from a remaining plurality of teeth, a beta sensor for detecting movement of the plurality of teeth past the beta sensor and generating an output function responsive thereto, a memory for storing a reference point for a characteristic associated with the output function, a controller connected to receive the output function, where the controller is configured to detect the characteristic associated with the output function from the beta sensor generated responsive to passage of the outlier tooth and other teeth of the beta ring past the beta sensor, compare the detected characteristic with the reference point for the characteristic associated with the output function, determine if the detected characteristic is different from the reference point for the characteristic by a first amount, where the first amount indicates that the beta sensor have moved the first amount from a previous position with respect to the beta ring and in response to in response to the determining that the detected characteristic is different from the reference point by the first amount, the determining that the detected characteristic is different from the reference point by the first amount, generate a fault code indicating that the beta sensor have moved at least the first amount.

Any single one or any combination of the following features may be used with the aspect above. The system where the controller is further configured to store the detected characteristics associated with the output function from the beta sensor within the memory. The controller is further configured to: establish the reference point for the characteristic associated with the output function after initial installation of the output function; and store the reference point within the memory. The controller is further configured to determine a period of a waveform may include the output function responsive to the outlier tooth on a surface of the beta ring. The controller is further configured to compare a period of the waveform from the beta sensor with a previously recorded period of the waveform associated with the beta sensor. The detected characteristic may include a period of a waveform of the beta sensor, as well as any others, e.g. those identifying changes in the relative position of the Beta sensor with respect to the Beta ring.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates is a schematic diagram of a system for electronic beta feedback detection in accordance with this disclosure;
FIGURE 2 illustrates a schematic diagram of the propeller assembly showing a feedback ring in accordance with this disclosure;
FIGURE 3 illustrates a block diagram of a system including components for sensing relative positions of beta sensors in accordance with this disclosure;
FIGURE 4 illustrates waveform data generated from a beta sensor in accordance with this disclosure;
FIGURE 5 illustrates an alternative embodiment of waveform data generated from a beta sensor in accordance with this disclosure;
FIGURE 6 illustrates a method for detecting movement of a beta sensor with respect to a beta ring based upon relative differences between beta sensor data characteristics in accordance with this disclosure; and
FIGURE 7 illustrates a process for detecting movement of a beta sensor using data from a single sensor in accordance with this disclosure.

### DETAILED DESCRIPTION

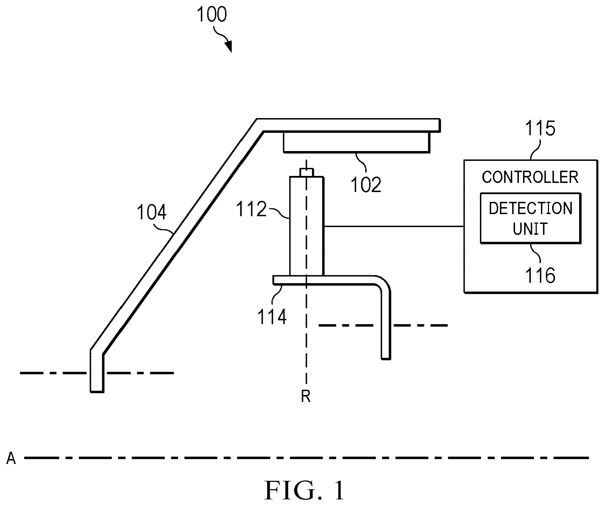

FIGURES 1 through 7, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

Referring to FIGURE 1, an electronic beta feedback system 100 will now be described. The system 100 provides for accurate detection and measurement of propeller blade angle on propeller systems. The system 100 may interface to existing mechanical interfaces of typical propeller systems to provide a digital detection for electronic determination of the propeller blade angle.

The system 100 illustratively comprises a beta ring 104 and one or more beta sensors 112 positioned proximate the beta ring 104. Beta ring 104 has a plurality of teeth 102 provided thereon for detection by beta sensor 112. One of beta ring 104 and beta sensor 112 may be mounted for rotation with propeller assembly 30 and to move axially with adjustment of the blade angle.

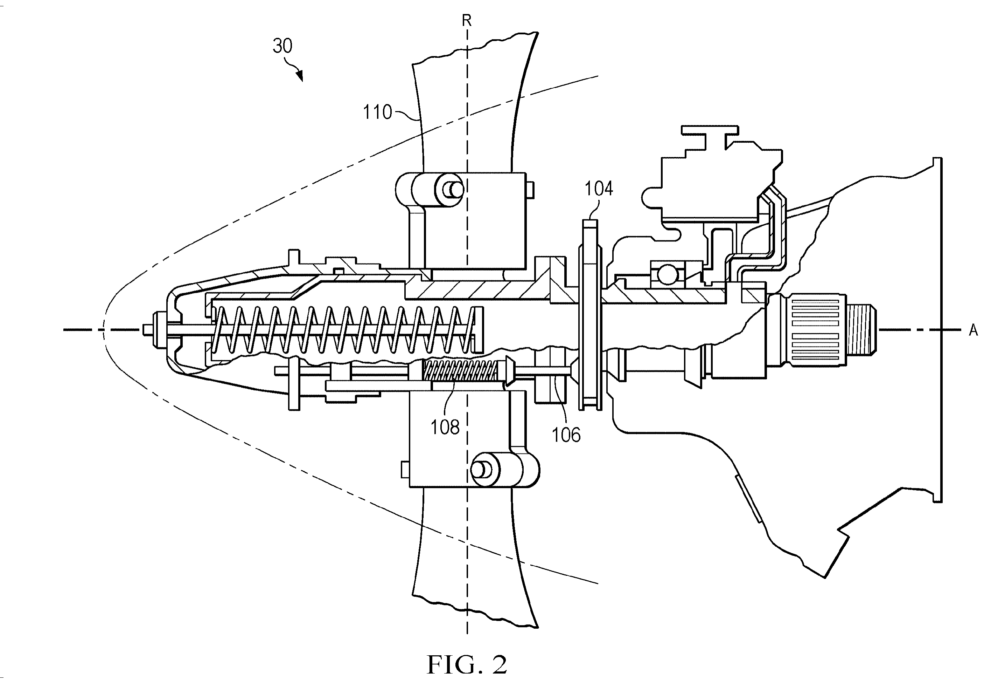

FIGURE 2 illustrates a schematic diagram of the propeller assembly 30 showing a feedback ring in accordance with this disclosure. As depicted in FIGURE 2, the beta ring 104 is supported for rotation with the propeller assembly 30, which rotates about the longitudinal axis A. The beta ring 104 is also supported for longitudinal sliding movement along the axis A, e.g., by support members, such as a series of circumferentially spaced beta feedback rods 106 that extend along the longitudinal axis A. A compression spring 108 surrounds an end portion of each rod 106.

As depicted in FIGURE 2, the propeller assembly 30 comprises a plurality of angularly arranged blades 110 each of which is rotatable about a radially extending axis R through a plurality of adjustable blade angles, the blade angle being the angle between the chord line (i.e. a line drawn between the leading and trailing edges of the blade) of the propeller blade section and a plane perpendicular to the axis of propeller rotation. The propeller assembly 30 may be a reversing propeller having a plurality of modes of operation, such as feather, full reverse, and forward thrust. In some modes of operations, such as feather, the blade angle is positive. The propeller assembly 30 may be operated in a reverse mode where the blade angle is negative.

Beta ring 104 is mounted to move along the longitudinal direction as the beta angle of the propeller blades 110 is adjusted. Specifically, adjustment of the beta angle causes a corresponding axial movement of the rods 106, and accordingly of the beta ring 104, parallel to axis A. Conversely, adjustment of the beta angle in a first direction causes beta ring 104 to move forwardly, and adjustment of the beta angle in the opposite direction causes beta ring 104 to move rearwardly. In an example, rods 106 and beta ring 104 are moved to a maximally forward position when blades 110 are at their smallest (or most negative) beta angle and are moved to a maximally rearward position when blades 110 are at their largest (or most positive) beta angle. As will be apparent, in other embodiments, this orientation may be reversed.

The beta ring 104 is illustratively used to provide blade (or beta) angle position feedback. During rotation of the propeller assembly (reference 30 in FIGURE 2), the feedback ring and plurality of teeth 102 rotate about longitudinal axis A and their passage is detected by at least two beta sensors 112 provided in a fixed relationship relative to the rotating propeller components. The beta sensor 112 may be any sensor (e.g., a speed transducer) configured to continuously detect passage of the teeth 102 during rotation of the propeller assembly 30. In one embodiment, the beta sensor 112 is an electrically robust and environmentally sealed non-contact sensor suited for harsh environments and offering superior reliability. The beta sensor 112 may be any suitable inductive sensor having a varying reluctance or a Hall effect. In one embodiment, the beta sensor 112 is implemented as a transducer comprising a coil wound around a permanent magnet (not shown). The teeth 102 may then be made of a magnetically conductive material, e.g., a ferrous metal, to enable the beta sensor 112 to detect the passage thereof.

FIGURE 1 depicts a side view of a portion of beta ring 104 and beta sensor 112. The beta sensor 112 is illustratively mounted to a flange 114 of a housing of reduction gearbox so as to be positioned adjacent the plurality of teeth 102. In particular, the beta sensor 112 is illustratively secured to the propeller assembly 30 so as to extend away from the flange 114 (and towards the teeth 102) along a radial direction, identified in FIGURE 1 as direction R. Beta sensor 112 and flange 114 may be fixedly mounted. In one embodiment, two beta sensors 112 are mounted in close proximity to the beta ring 104 and the teeth 102. In another embodiment, in order to provide redundancy, one or more additional beta sensors 112 may be provided. For example, an additional beta sensor 112 may be mounted in a diametrically opposite relationship relative to the teeth 102, which illustratively extend away from the beta ring 104 and towards the beta sensor(s) 112. In yet another embodiment, several teeth 102 may be spaced equiangularly about the perimeter of the beta ring 104. Other embodiments may apply.

A controller 115 including a detection unit 116 is illustratively electrically connected to the beta sensor(s) 112 and configured to receive output signal(s) therefrom, the output signal(s) generated upon the beta sensor(s) 112 detecting the passage of given teeth 102 adjacent thereto, as will be discussed further below. Controller 115 is configured to provide, on the basis of the signal(s) received from the beta sensor(s) 112, blade angle position feedback for the propeller (reference 30 in FIGURE 2). The controller 115 may comprise one or more processors 121 (e.g., a microprocessor), a memory 123, a non-volatile storage 125, and one or more input-output (I/O) interfaces 127. I/O interfaces 127 may interconnect with detection unit 116 for receiving data and may also interconnect with instrumentation of the aircraft, e.g., dials or displays in the cockpit. The detection unit 116 may further determine from the received output signal(s) the rotational speed of the propeller assembly 30 as well as achieve propeller blade synchrophasing and propeller speed synchronization. Other applications will be readily understood by a person skilled in the art.

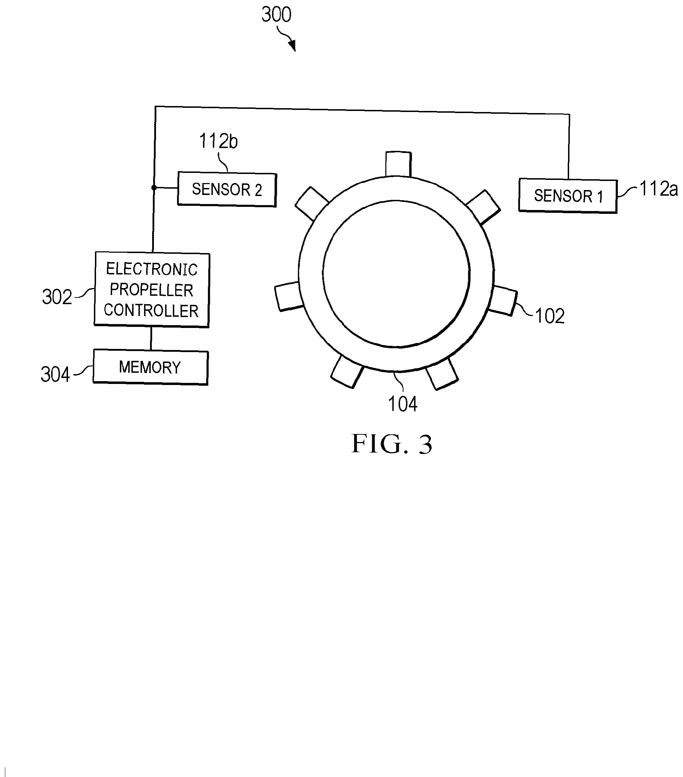

FIGURE 3 illustrates a block diagram of a system 300 including components for sensing relative positions of beta sensors 112 with respect to the beta ring 104 in accordance with this disclosure. As shown in FIGURE 3, there is illustrated a block diagram of a beta ring 104 including a plurality of teeth 102 located around the beta ring 104. As the beta ring 104 rotates with the propeller, the teeth 102 on the beta ring will pass by sensor 1 112a and sensor 2 112b. The beta sensors 112 detect propeller angle and/or speed. The teeth 102 are mounted on the beta ring 104 which rotates and passes the teeth passed the beta sensors 112. The beta sensors 112 detect the passage of the teeth 102 past the sensors. The sensor signals from the beta sensors 112 are transmitted to the electronic propeller controller (EPC) 302 which monitors and analyzes the sensor inputs. The EPC 302 may comprise any of the electronic propeller controller, engine and propeller electronic controller, FADEC, engine electronic controller or any electronic controller that performs control over propeller operations including control over the propeller blade angle.

The EPC 302 can detect errors in the received sensor signals, determine a failure condition indicated by the signals and based on the readings received from the beta sensors 112 govern and control of the propeller blade angle and/or speed. The detected sensor signals from the beta sensors 112 may also be stored within a memory 304 such that past history of the sensor signals from the beta sensors 112 may be maintained.

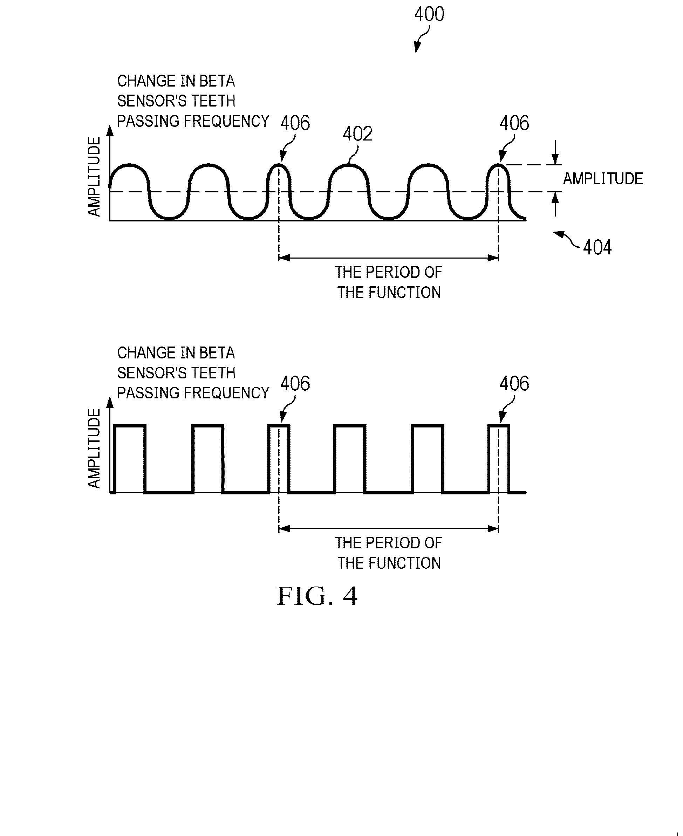

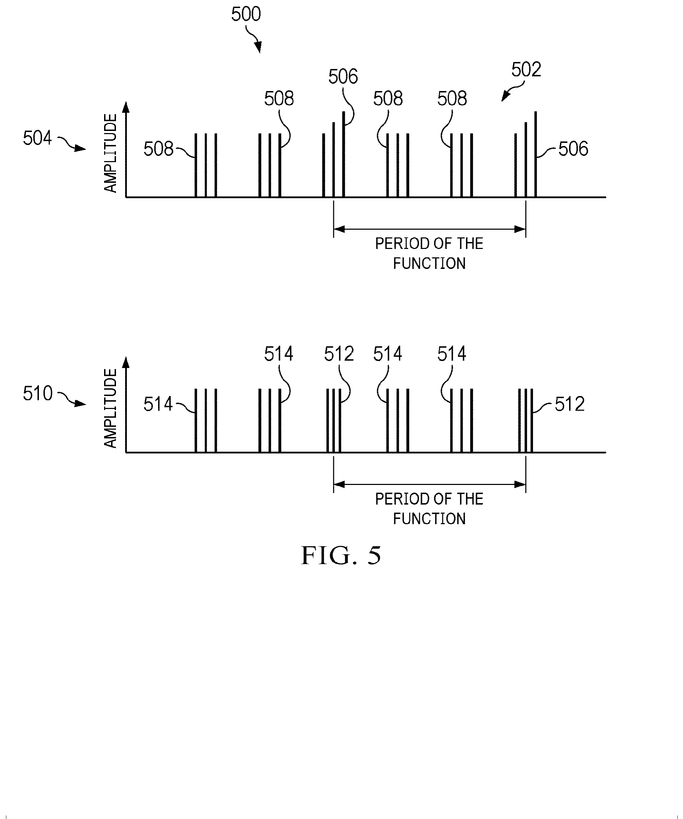

The beta sensors 112 sense the teeth 102 of the beta ring 104 passing by the sensor and thus the passing frequency of the teeth. Depending on the distance from the beta sensor 112, the sensing signal may be stronger or weaker. Continuous recording of the passing teeth 102 and the surface of the beta ring 104 which is toothless provides a trend line or function that can be used and analyzed by the EPC 302. One of the teeth 102 on the beta ring 104 is an outlier tooth that is used to identify the axial position of the beta ring. The outlier tooth enables identification of changes in readings from the beta sensor 112 such as a change in the period or phase of a trend line or function that may indicate that the beta sensor 112 has moved relative to the beta ring 104. The trend line or function in one embodiment comprises a sinusoidal like function based upon when recorded sensor signals are stronger when the surface is closer to the beta sensor 112 and weaker when the surface is at a greater distance. The distance can be measured precisely as a metric value or be recorded as a trend (or function) of teeth passing frequency. A trend (or function) can be obtained based on the variable intensity of the signal recorded by the beta sensors 112, depending on the distance of the passing element (teeth 102 or beta ring surface) from the beta sensor. Examples of trend or functions are illustrated in FIGURES 4 and 5 for teeth (FIGURE 4) or groups of pins (FIGURE 5).

Because the location of the beta sensors 112 may affect the pass function of the teeth 102 of the beta ring 104 due to distance between the teeth 102 and the beta sensors 112 being a factor, the EPC 302 may require a location of the beta sensors 112 to be determined at the time of the beta sensor installation to apply the required correction or to establish a reference point (position) to which given readings refer. If the location of the beta sensors 112 change during operation prior to a calibration of the EPC 302, the changes may be detected in the relative position of the beta sensors 112 by analyzing the sensor output trends or functions from each of the sensors 112a and 112b.

FIGURE 4 illustrates waveform data 400 generated from a beta sensor in accordance with this disclosure. As shown in FIGURE 4, the trend or function 402 shown in the upper example 404 corresponds to a case where the beta sensor 112 continuously records signals read from the beta ring 104. Based on the recording of changes over time, a sinusoidal -like function 402 is obtained, which corresponds to the beta sensor 112 generating the cyclical signals base upon detection of the teeth 102 and the ring surface passing by the beta sensor 112. In the lower example 406 of FIGURE 4, the beta sensor 112 receives signals only from the teeth 102 of the beta ring 104 but does not read anything from the surface of the beta ring because the surface is far further from the teeth at a greater distance than the tooth and the sensing element is unable to detect the surface (or due to the teeth being magnetized and not the surface of the Beta Ring or due to other failures). Thus, the beta sensor 112 does not read anything for the toothless surfaces of the beta ring 104. The narrower portions of the function 406 are from detection of the outlier tooth 102 that is different from the remaining teeth. This enables determination of the actual position of the beta ring 104. Note that the illustration of the function 406 in FIGURE 4 corresponds to a particular beta ring 104 position, a different trend or feature will correspond to a different beta ring position and thus a different propeller blade angle. The difference may consist of any different period of operation of the function read by the beta sensors 112 which may be defined as the period between the identified to maximums of consecutive outlier tooth readings or is a variable period between the maximum of the normal reading and the maximum of the outlier tooth or any other as appropriate.

The differences in design of the outlier tooth 102 can be done in a variety of fashions including a different shape, installation at a different angle, installation at a different distance from neighboring teeth, additional material added to the surface of the outlier tooth or any other manner for enabling differentiation between the outlier tooth and the remaining teeth 102 of the beta ring 104.

FIGURE 5 illustrates an alternative embodiment of waveform data 500 generated from a beta sensor 112 in accordance with this disclosure. Referring now to FIGURE 5, there is illustrated an alternative embodiment for generating a trend or function 502 wherein the beta sensor 112 detects pins on the beta ring rather than teeth. The trend or function 502 shown in the upper example 504 corresponds to a case where the beta sensor 112 continuously records signals read from the beta ring 104. Each line represents a series of pins. In this case, the outlier pins comprise pins of different heights shown generally at 506 while the standard groups of pins shown at 508 all of the same height (and/or magnetization). In the lower example 510 of FIGURE 5, The groups of pins have the same height (or/and the same magnetization) but a different spacing. The outlier pin groups 512 have a different spacing than the standard groups of pins 514. The beta sensor 112 receives signals from the groups of pins on the beta ring 104 and determines the period of the rotation base on the detection of the outlier pin groups 506, 512.

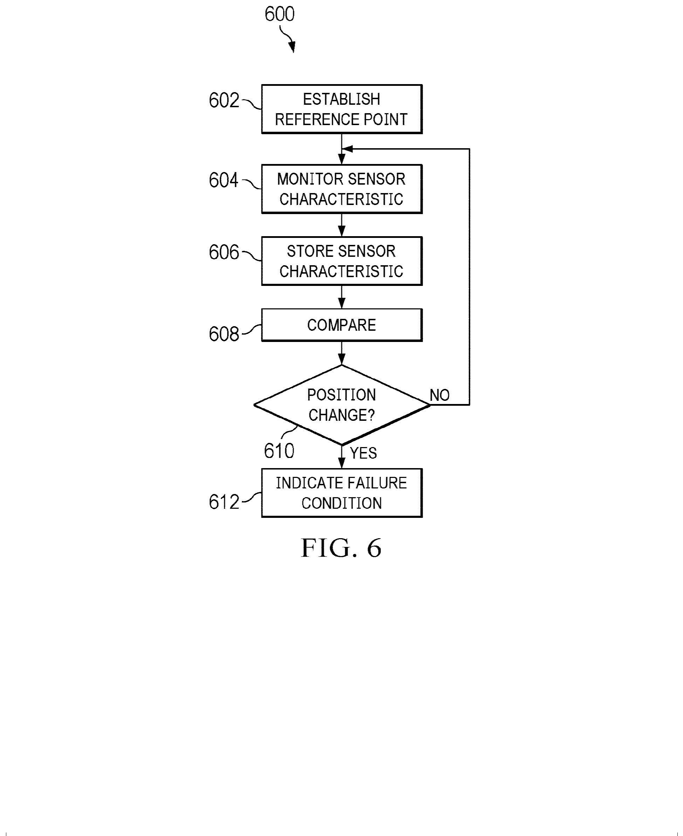

FIGURE 6 illustrates a method 600 for detecting movement of a beta sensor 112 based upon relative differences between beta sensor data characteristics in accordance with this disclosure. Initially, a reference point for the characteristics between the trends or functions of each of the beta sensor 112 is determined at step 602. During initial installation of the beta sensor 112, the relative distance between a beta sensor and the beta ring 104 will be constant with consistent operation and a monitored characteristic should remain constant if the beta sensor position remains unchanged. The sensor characteristic is monitored at step 604 as the aircraft engine operates. The detected sensor characteristic is stored within the memory 304 as it occurs so that the comparison of current operating characteristic can be compared to a previous operating characteristic to detect differences indicating a change in position of the beta sensor 112. When a new sensor characteristic is received, this may be compared to the reference point at step 608. Inquiry step 610 determines if there has been a change in a sensor position based upon a difference in the compared characteristic. If no change in characteristics has occurred there is no position change and control passes back to step 604 to continue to monitor the output sensor characteristics. If inquiry step 610 determines that there is a difference in the sensor characteristics, a position change is indicated, and control passes to step 612 to indicate a failure condition as discussed above.

The differences in the characteristics between the beta sensor 112 and the beta ring 104 can take multiple forms. One manner for detecting differences compares the characteristics of the function recorded by the beta sensor for the identified main characteristics (e.g. the function, maximum, minimum, time from outlier to outlier, time from outlier to the closest tooth, phase of the function, trend of changes in signals reading of the teeth passing, or any other). The recorded parameters which provide the characteristics of the function are continuously compared for the beta sensor 112. The comparison can be only for the values that can be a function of the time delay for the beta sensor 112 recording the passage of the outlier tooth or pins. Based upon the recorded characteristics of functions for the beta sensor 112, a trend for sensor to sensor comparison can be obtained. This would be recorded by the EPC 302 to be compared to the future records from the beta sensor 112 to determine any deviation to the trend. If the trend for the sensor is not a fixed value but is dependent from propeller blade speed and/or angle, the trend that the EPC 302 will have built-in can be a function of the propeller speed and/more propeller angle.

There are many ways to define the trend in characteristics monitored by the EPC 302. The characteristics that will be used for performing relative comparison between recorded functions by both beta sensors 112 can be determined from an analysis of the recorded functions. The recorded functions may be any of those illustrated with respect to FIGURES 4-5. A break in the trend of the monitored characteristics would indicate a relative displacement of the beta sensor 112 with respect to the beta ring 104. In a situation where there is no change in the relative reading following the beta sensor reinstallation, the reinstallation would be considered as introducing no change (or break) from the previous relative readings and will therefore be considered as not requiring recalibration of the EPC 302.

A determination of changes in the trends in the monitored characteristics will be used to identify a change relative to position of the sensor that is unacceptable or considered unsafe can be determined experimentally using test or computer simulations and then implemented within the EPC 302 as detection criteria.

Trending of the beta sensor readings over multiple flights and in multiple cycles of the recorded beta sensor function at each flight would create a pattern. The EPC 302 would set this pattern as a reference baseline. This reference baseline would be compared by the EPC 302 to a new flight record for detection of problems.

The rejection criteria implemented in step 608 may be obtained in multiple forms. Specifics of the function can be by defining one of the characteristics as the time mean reading between successive maximums (or extremes). When the outlier tooth passes through the sensing field of a sensor being a starting point and the ending point would be the point of time when the same outlier tooth passes through the sensor again. This time would be monitored and compared to thresholds that are unacceptable for the relative changes.

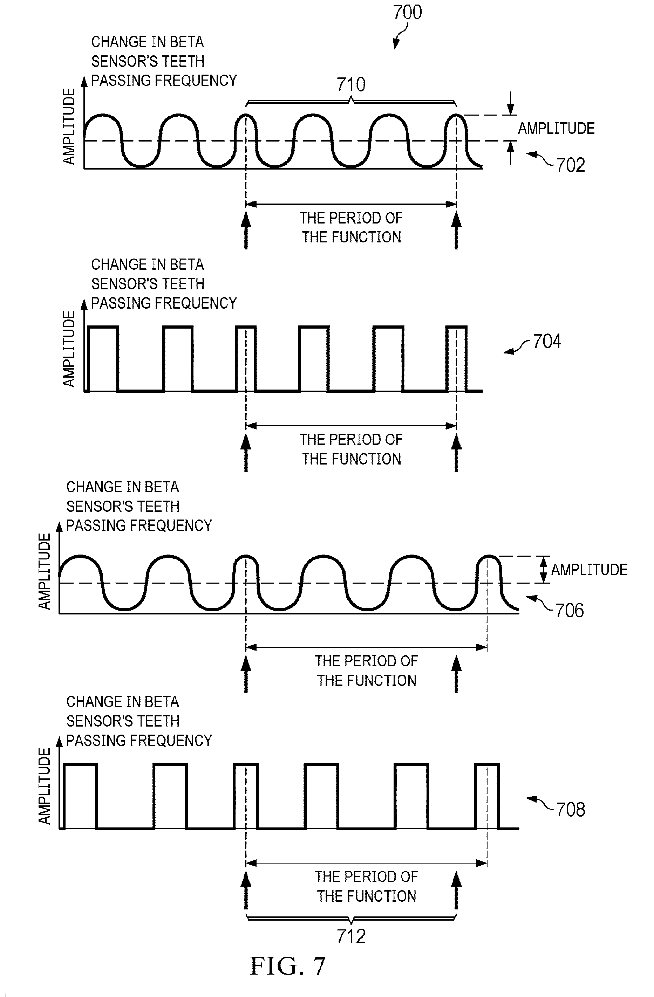

FIGURE 7 illustrates a process 700 for detecting movement of a beta sensor 112 using data from a single sensor in accordance with this disclosure. As shown in FIGURE 7, the process 700 includes determining when operation of a single beta sensor 112 enters an unacceptable range of a specific characteristic that is being monitored by the EPC 302 within specific windows. Waveforms 702 and 704 represent the waveforms from a sensor 112 over a cumulative period of time while waveforms 706 and 708 represent the waveforms from a second sensor at a current time. A window 710 for the cumulative waveform is compared to the same window 712 for the current waveform. As can be seen when comparing the waveforms 702/704 within the window 710 and the waveforms 706, 708 within the window 712, waveforms within each of the windows do not match. When the waveforms within the window 712 are sufficiently different from the waveforms in the window 710, an error indication such as a fault code may be generated in response to the determining that the waveforms are sufficiently different.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least two of," when used with a list of items, means that different combinations of two or more of the listed items may be used, and only two items in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

Additional embodiments of the invention which are disclosed but not presently claimed are provided in the following clauses.
Clause 1. A method for detecting relative movement of a position of a beta sensor with respect to a beta ring, comprising:
   detecting a waveform having a first period generated by the beta sensor responsive to passage of a plurality of indicators of a beta ring past the beta sensor;
   comparing the detected waveform having the first period with a reference waveform having a reference period within a controller;
   determining if the detected waveform is different from the reference waveform by a first amount within the controller, wherein the first amount indicates that one of the beta sensors has moved the first amount from a previous position with respect to the beta ring; and
   in response to the determining that the detected characteristic is different from the reference point by the first amount, generating a fault code indicating that the beta sensor has moved at least the first amount with respect to the beta ring.
Clause 2. The method of Clause 1 further comprising storing the detected waveform having the first period within a memory.
Clause 3. The method of Clause 2, wherein the step of storing further comprising storing multiple versions the detected waveform detected and a plurality of points in time.
Clause 4. The method of Clause 1 or 2 further comprising:
   establishing the reference waveform having the reference period for the beta sensor using the controller after initial installation of the beta sensor; and
   storing the reference waveform within a memory.
Clause 5. The method of Clause 4 further comprising updating the reference waveform with a later determined waveform for the beta sensor.
Clause 6. The method of any of Clauses 1-5, wherein the step of detecting further comprise:
   recording movement of the plurality of indicators on a surface of the beta ring rotating past the beta sensor; and
   generating the waveform having the first period from the recorded movement of the plurality of indicators.
Clause 7. The method of any of Clauses 1-6, wherein the steps of detecting further comprise determining the first period of the waveform responsive to an outlier indicator on the surface of the beta ring.
Clause 8. The method of any of Clauses 1-7, wherein the fault code comprises at least one of a maintenance fault code and a dispatch fault code.

## Claims

1. A method for detecting relative movement of a position of a beta sensor (112), comprising:
detecting a characteristic associated with an output waveform from a beta sensor (112) generated responsive to passage of an indicator (102) of a beta ring (104) past the beta sensor (112);
comparing the detected characteristic with a reference point for the characteristic associated with the output waveform for the beta sensor (112) within a controller (115);
determining if the detected characteristic associated with the output waveform is different from the reference point for the characteristic associated with the output waveform by a first amount within the controller (115), wherein the first amount indicates that the beta sensor (112) has moved the first amount from a previous position with respect to the beta ring (104); and
in response to the determining that the detected characteristic is different from the reference point by the first amount, generating a fault code indicating that the beta sensor (112) has moved at least the first amount with respect to the beta ring (104).

2. The method of Claim 1 further comprising storing the detected characteristics associated with the output waveform from the beta sensor (112) within a memory (123).

3. The method of Claim 1 or 2 further comprising:
establishing the reference point for the characteristic associated with the output waveform for the beta sensor (112) after initial installation of the beta sensor (112); and
storing the reference point within a/the memory (123).

4. The method of Claim 1, 2 or 3, wherein the step of detecting further comprises:
recording movement of a plurality of indicators (102) on a surface of the beta ring (104) rotating past the beta sensor (112); and
generating a waveform from the recorded movement of the indicators (102).

5. The method of Claim 4, wherein the step of detecting further comprises determining a period of the waveform responsive to an outlier indicator (102) on the surface of the beta ring (104).

6. The method of any preceding claim, wherein the step of comparing further comprises comparing the period of the waveform with a previously recorded period of the waveform associated with the beta sensor (112).

7. The method of any preceding claim, wherein the fault code comprises at least one of a maintenance fault code and a dispatch fault code.

8. A system (100) for detecting relative movement of a position of beta sensors (112), comprising:
a beta ring (104) having a plurality of teeth (102) thereon, wherein one of the plurality of teeth (102) comprises an outlier tooth (102) that is different from a remaining plurality of teeth (102);
a beta sensor (112) for detecting movement of the plurality of teeth (102) past the beta sensor (112) and generating an output function responsive thereto;
a memory (123) for storing a reference point for a characteristic associated with the output function;
a controller (115) connected to receive the output function, wherein the controller (115) is configured to:
detect the characteristic associated with the output function from the beta sensor (112) generated responsive to passage of the outlier tooth (102) of the beta ring (104) past the beta sensor (112);
compare the detected characteristic with the reference point for the characteristic associated with the output function;
determine if the detected characteristic is different from the reference point for the characteristic by a first amount, wherein the first amount indicates that the beta sensor (112) have moved the first amount from a previous position with respect to the beta ring (104); and
in response to the determining that the detected characteristic is different from the reference point by the first amount, generate a fault code indicating that the beta sensor (112) has moved at least the first amount.

9. The system of Claim 8, wherein the controller is further configured to store the detected characteristics associated with the output function from the beta sensor (112) within the memory (123).

10. The system of Claim 8 or 9, wherein the controller (115) is further configured to:
establish the reference point for the characteristic associated with the output function after initial installation of the output function; and
store the reference point within the memory (123).

11. The system of Claim 8, 9 or 10, wherein the controller (115) is further configured to determine a period of a waveform comprising the output function responsive to the outlier tooth (102) on a surface of the beta ring (104).

12. The system of any of Claims 8 to 11, wherein the controller (115) is further configured to compare a period of the waveform from the beta sensor (112) with a previously recorded period of the waveform associated with the beta sensor (112).

13. The system of any of Claims 8 to 12, wherein the detected characteristic comprises a period of a waveform of the beta sensor (112).
